# FASCICULE DE BREVET EUROPEEN

(11) **EP 1 721 793 B1**
(45) Date de publication et mention de la délivrance du brevet: **08.08.2007**
(21) Numéro de dépôt: 05291010.6
(22) Date de dépôt: 11.05.2005
(51) Int. Cl.: B60R 25/00, G07C 9/00

(54) **Système de commande mains libres pour véhicule**
Freihändiges Kontrollsystem für Fahrzeuge
Hands-free control system for vehicles

(43) Date de publication de la demande: 15.11.2006
(73) Titulaire: Delphi Technologies, Inc., Troy, MI 48007-5052 (US)
(72) Inventeur: Lelandais, Guy, 91190 Gif-sur-Yvette (FR)
(74) Mandataire: Laget, Jean-Loup

(56) Documents cités:
- DE-A1- 10 052 451
- DE-C1- 19 850 176

## Description

La présente invention se rapporte à un système de commande dit mains libres pour véhicule. Plus particulièrement la présente invention se rapporte à un système apte à autoriser ou empêcher le démarrage d'un véhicule et/ou commander des moyens de condamnation/décondamnation des serrures des ouvrants du véhicule en fonction de la localisation d'un dispositif d'identification à l'intérieur ou à l'extérieur de l'espace intérieur du véhicule.

Le document DE-100 52 451-A1 décrit un système de commande selon le préambule de la revendication 1.

Au sens de l'invention, l'espace intérieur du véhicule inclut tout espace délimité par des parois, cet espace pouvant être habitable, comme l'habitacle, ou non habitable, comme le coffre. L'invention s'applique aussi aux véhicules dits monospace dans lesquels le coffre et l'espace habitable ne sont pas séparés.

On connaît des véhicules qui sont munis d'un système de commande mains libres du type ci-dessus. Dans ce cas, l'expression « mains libres » signifie qu'il n'est pas nécessaire d'utiliser une clé mécanique pour effectuer certaines opérations. Par exemple, le système de commande mains libres permet de mettre en oeuvre un procédé d'accès mains libres pour commander à distance un organe de condamnation de l'accès au véhicule, par exemple une serrure de portière ou de haillon de coffre, ou encore un procédé de démarrage mains libres pour commander à distance un organe de démarrage du véhicule.

Pour un véhicule muni d'un système de commande mains libres connu, le dispositif d'identification est un identifiant électronique, qui est un émetteur-récepteur destiné à être porté par un utilisateur autorisé du véhicule et qui remplace la clé mécanique. Une unité centrale de commande embarquée sur le véhicule établit un dialogue bidirectionnel à distance avec le dispositif récepteur portatif pour authentifier l'utilisateur et commander des moyens de condamnation/décondamnation des serrures des ouvrants, respectivement des moyens de mise en marche du moteur, lorsque l'utilisateur a été reconnu authentique. Par exemple, l'initialisation du protocole de communication peut être activée en touchant ou en actionnant la poignée extérieure de porte, ou encore par détection de la présence de la main au voisinage de la poignée extérieure de porte, pour l'accès mains libres ; ou en appuyant sur un bouton de démarrage sur le tableau de bord, pour le démarrage mains libres. En variante, cette initialisation peut être déclenchée en actionnant un bouton de commande du dispositif récepteur portatif.

Pour la liaison depuis l'unité centrale de commande vers le dispositif récepteur portatif, il est courant d'utiliser un champ magnétique modulé, avec une fréquence de porteuse située par exemple entre 10 kHz et 20 kHz, ou aux environs de 125 kHz, aux environs de 6 MHz ou encore aux environs de 13 MHz, en fonction des bandes autorisées.

Dans un tel véhicule, pour des raisons de sécurité, il est nécessaire de tenir compte de la position du dispositif récepteur portatif lors de différentes étapes du procédé de commande. Par exemple, il est préférable de n'autoriser le démarrage du véhicule que si le dispositif récepteur portatif se trouve à l'intérieur du véhicule et, a contrario, de n'autoriser la condamnation des portières, respectivement du haillon de coffre, que si le dispositif récepteur portatif se trouve à l'extérieur de l'habitacle du véhicule, respectivement de son coffre. Quant à la décondamnation des serrures, celle-ci ne doit être autorisée que lorsque l'utilisateur est assez près du véhicule pour être conscient du déroulement des opérations commandées, afin d'éviter une mise en oeuvre accidentelle ou frauduleuse du procédé de commande.

EP-1 363 354-A1 divulgue système d'accès mains libres, dans lequel une antenne boucle délimite une zone de détection correspondant à l'espace intérieur d'un véhicule. Le dispositif d'identification portable mesure l'amplitude du champ émis par l'antenne boucle, ce qui permet de déterminer si le dispositif d'identification se trouve dans la zone de détection ou non.

Ce système d'accès mains libres présente plusieurs inconvénients. L'amplitude du champ émis par l'antenne boucle au voisinage de la périphérie de la zone de détection est sensiblement égale à l'intérieur et à l'extérieur de la zone de détection. Il n'est donc pas toujours possible de localiser le dispositif d'identification de manière fiable. De plus, si la zone de détection est de taille importante, il est nécessaire de prévoir plusieurs antennes boucle ou une antenne formant plusieurs boucles, ce qui complique le système et augmente le travaille nécessaire à son installation sur un véhicule. La fréquence de porteuse utilisée doit être compatible avec l'antenne boucle. Enfin, on s'est aperçu que ce système ne fonctionnait pas correctement lorsque le dispositif d'identification est situé dans l'espace intérieur mais dans une valise métallique empêchant la communication radio avec l'unité centrale.

Les systèmes d'accès mains libres doivent être protégés du piratage, notamment du piratage par boîtier relais. Le principe du piratage par boîtier relais est connu et rappelé par EP-1 152 107-A1. Ce document décrit un système d'accès mains libres protégé du piratage par boîtier relais grâce à la mesure d'un décalage temporel entre deux signaux. Ce système nécessite l'utilisation d'un dispositif électronique coûteux pour la mesure du décalage temporel. De plus, la communication radio doit se faire à haute fréquence, de l'ordre de quelques centaines de MHz, ce qui implique des contraintes sur les antennes pouvant être utilisées. A de courtes distances, cette solution peut présenter des comportements imprévisibles à cause de la propagation selon des chemins multiples de telles ondes haute fréquence.

L'utilisation de capteur d'infrasons est connue pour la détection d'intrusion. Par exemple, WO 95/06925 décrit un dispositif de détection d'intrusion dans un véhicule par mesure d'infrasons. Ce dispositif est destiné à détecter l'intrusion d'un voleur. Il ne permet pas de déterminer si un utilisateur portant un dispositif d'identification est à l'intérieur ou à l'extérieur du véhicule.

L'invention vise à remédier aux inconvénients précités de l'art antérieur. Plus particulièrement, un but de l'invention est de fournir un système de commande mains libres permettant de déterminer la localisation d'un dispositif d'identification à l'intérieur ou à l'extérieur de l'espace intérieur de manière fiable. Un autre but de l'invention est de fournir un système de commande mains libres qui soit protégé du piratage par boîtier relais.

Pour cela, un premier objet de invention est un système de commande dit mains libres pour véhicule, comprenant une unité centrale de commande embarquée sur ledit véhicule et un dispositif d'identification destiné à être porté par un utilisateur, ledit dispositif d'identification incluant un émetteur pour transmettre des signaux à distance et sans fil à ladite unité centrale de commande, ladite unité centrale comprenant un récepteur pour recevoir lesdits signaux, ladite unité centrale comportant des moyens d'authentification pour authentifier ledit dispositif d'identification et des moyens de localisation pour déterminer si ledit dispositif d'identification est localisé à l'intérieur ou à l'extérieur d'un espace intérieur dudit véhicule à partir desdits signaux, ladite unité centrale comprenant des moyens de commande pour autoriser ou empêcher le démarrage dudit véhicule et/ou commander des moyens de condamnation/décondamnation des serrures des ouvrants dudit véhicule en fonction de la localisation dudit dispositif d'identification à l'intérieur ou à l'extérieur dudit espace intérieur, caractérisé par le fait que ledit dispositif d'identification comprend un capteur apte à mesurer des variations de pression dans l'environnement dudit dispositif d'identification dans un domaine de fréquences infrasonore, ledit émetteur du dispositif d'identification étant apte à transmettre un signal de réponse dépendant desdites variations de pression mesurées par ledit capteur à ladite unité centrale, lesdits moyens de localisation de ladite unité centrale comprenant un comparateur apte à comparer ledit signal de réponse avec un signal de référence auquel sont corrélées des variations de pression dans ledit espace intérieur dans un domaine de fréquences infrasonore afin de déterminer la localisation dudit dispositif d'identification à l'intérieur ou à l'extérieur dudit espace intérieur.

Les parois délimitant l'espace intérieur du véhicule forment un relativement bon écran à la propagation des variations de pression dans le domaine de fréquences infrasonore. Ainsi, il existe une forte différence entre les variations de pression dans le domaine infrasonore dans l'espace intérieur et à l'extérieur du véhicule. Ainsi, la comparaison du signal de réponse et du signal de référence permet de déterminer de manière fiable la localisation du dispositif d'identification.

Le piratage par boîtier relais de ce système de commande impliquerait de recréer un environnement infrasonore déterminé à distance. Comme cette opération est très difficile, voire impossible, le système de commande est protégé contre le piratage par boîtier relais. Recréer un environnement infrasonore impliquerait un dispositif relativement encombrant, ce qui est incompatible avec la discrétion nécessaire aux pirates.

Ce système de commande mains libres peut être facilement complété par une communication par ondes électromagnétiques entre l'unité centrale et le dispositif d'identification, par exemple pour réaliser la fonction d'authentification du dispositif d'identification selon tout procédé approprié. Aucune contrainte sur la fréquence utilisée ni le nombre et la disposition des antennes n'est imposée par la fonction de localisation du dispositif d'identification ni la fonction de protection contre les attaques relais. Ainsi, cette communication par onde électromagnétique peut être réalisée par un système d'antennes simple et peut coûteux. De plus, il n'est pas nécessaire que le procédé d'authentification par communication électromagnétique soit protégé contre les attaques relais.

La corrélation entre le signal de référence et les variations de pression régnant dans l'espace intérieur peut être une relation de cause à effet, au sens où un signal de référence prédéterminé est utilisé pour générer des variations de pression correspondantes. Ainsi, selon un mode de réalisation particulier, le système de commande comporte au moins un haut-parleur apte à générer des variations de pression dans un domaine de fréquences infrasonore dans ledit espace intérieur, ladite unité centrale comprenant un générateur de signal pour engendrer ledit signal de référence de manière contrôlée et un circuit de sortie apte à commander ledit haut-parleur en fonction dudit signal de référence pour produire lesdites variations de pression dans ledit espace intérieur.

De préférence, lesdites variations de pression présentes dans ledit espace intérieur portent une information numérique de référence.

Avantageusement, ledit dispositif d'identification inclut un détecteur de bit relié audit capteur pour décoder ladite information numérique de référence incluse dans lesdites variations de pression présente dans l'espace intérieur et un générateur de réponse pour encoder une information numérique de réponse en fonction de ladite information numérique de référence, ledit signal de réponse incluant ladite information numérique de réponse.

Selon un mode de réalisation particulier, ledit au moins un haut-parleur est agencé sur une surface de séparation qui sépare ledit espace intérieur en deux volumes intérieurs, lesdits moyens de localisation étant aptes à déterminer si ledit dispositif d'identification est localisé dans l'un ou l'autre desdits deux volumes en fonction d'une relation de corrélation entre le signal de réponse et le signal de référence commandant ledit haut-parleur.

De préférence, lesdits moyens de localisation sont aptes à déterminer ladite relation de corrélation entre ladite information numérique de réponse et ladite information numérique de référence.

Avantageusement, l'émetteur dudit dispositif d'identification est apte à transmettre un signal de réponse incluant un signal de mesure qui représente une amplitude desdites variations de pression mesurées.

De préférence, lesdits moyens de localisation sont aptes à mesurer ladite relation de corrélation entre les variations de pression représentées par ledit signal de mesure et ledit signal de référence.

La corrélation entre le signal de référence et les variations de pression régnant dans l'espace intérieur peut aussi être une relation d'effet à cause, au sens où les variations de pression existant dans l'espace intérieur, quelle que soit leur cause, servent à produire le signal de référence, par exemple au moyen d'un capteur de pression. Ainsi selon un mode de réalisation particulier, ladite unité centrale est reliée à un capteur intérieur agencé de manière à mesurer des variations de pression dans ledit espace intérieur dans un domaine de fréquences infrasonore, ledit signal de référence comprenant un signal de référence intérieur représentatif des variations de pression mesurées par ledit capteur intérieur, ledit comparateur étant apte à comparer ledit signal de référence interne avec ledit signal de mesure.

Avantageusement, ladite unité centrale est reliée à un capteur extérieur agencé de manière à mesurer des variations de pression à l'extérieur dudit véhicule dans un domaine de fréquences infrasonore, ledit signal de référence comprenant un signal le référence extérieur représentatif des variations de pression mesurées par ledit capteur extérieur, ledit comparateur étant apte à comparer ledit signal de référence extérieur avec ledit signal de mesure.

De préférence, lesdits moyens de localisation comprennent un détecteur de bit apte à détecter une information numérique incluse dans ledit signal de mesure.

Selon un mode de réalisation particulier, ledit émetteur du dispositif d'identification est apte à transmettre ledit signal réponse de manière numérique et cryptée, ladite unité centrale comprenant un décodeur pour décrypter ledit signal de réponse.

L'invention fournit également un procédé de commande d'un système de commande dit mains libres pour véhicule, ledit système comprenant une unité centrale de commande embarquée sur ledit véhicule et un dispositif d'identification destiné à être porté par un utilisateur, ledit procédé comportant les étapes consistant à :
- mesurer des variations de pression dans l'environnement dudit dispositif d'identification dans un domaine de fréquences infrasonore,
- transmettre des signaux à distance et sans fil depuis ledit dispositif d'identification à ladite unité centrale de commande, lesdits signaux incluant un signal de réponse dépendant desdites variations de pression dans l'environnement dudit dispositif d'identification,
- mettre à disposition de ladite unité centrale un signal de référence auquel sont corrélées des variations de pression dans ledit espace intérieur dans un domaine de fréquences infrasonore,
- déterminer la localisation dudit dispositif d'identification à l'intérieur ou à l'extérieur dudit espace intérieur en fonction dudit signal de réponse et dudit signal de référence,
- autoriser ou empêcher le démarrage dudit véhicule et/ou commander des moyens de condamnation/décondamnation des serrures des ouvrants dudit véhicule en fonction de la localisation dudit dispositif d'identification à l'intérieur ou à l'extérieur dudit espace intérieur.

De préférence, le procédé comprend l'étape consistant à authentifier ledit dispositif d'identification à l'aide desdits signaux.

Selon un mode de réalisation particulier, ledit signal de référence est mis à disposition de l'unité centrale par un capteur de pression.

Avantageusement, ledit signal de référence est mis à disposition de l'unité centrale à partir d'une mémoire dans laquelle le signal de référence est stocké sous une forme prédéterminée.

Un deuxième objet de l'invention est un système de commande mains libres pour véhicule, comprenant une unité centrale de commande embarquée sur ledit véhicule et un dispositif d'identification destiné à être porté par un utilisateur, ledit dispositif d'identification incluant un émetteur pour transmettre des signaux à distance et sans fil à ladite unité centrale de commande, ladite unité centrale comprenant un récepteur pour recevoir lesdits signaux, ladite unité centrale comportant des moyens de localisation pour déterminer si ledit dispositif d'identification est localisé à l'intérieur ou à l'extérieur dudit véhicule à partir desdits signaux, ladite unité centrale comprenant des moyens de commande pour autoriser ou empêcher le démarrage dudit véhicule et/ou commander des moyens de condamnation/décondamnation des serrures des ouvrants dudit véhicule en fonction de la localisation dudit dispositif d'identification à l'intérieur ou à l'extérieur dudit véhicule, caractérisé par le fait que ledit dispositif d'identification comprend un premier capteur apte à mesurer une accélération dudit dispositif d'identification, ledit émetteur du dispositif d'identification étant apte à transmettre un signal de mesure dépendant de ladite accélération mesurée par ledit premier capteur à ladite unité centrale, et par le fait que ledit système de commande comprend un deuxième capteur agencé dans ledit véhicule de manière à mesurer une accélération dudit véhicule, ledit deuxième capteur étant connecté à ladite unité centrale, lesdits moyens de localisation de ladite unité centrale comprenant un comparateur apte à comparer ledit signal de réponse avec un signal de référence dépendant de ladite accélération mesurée par ledit deuxième capteur afin de déterminer la localisation dudit dispositif d'identification à l'intérieur ou à l'extérieur dudit véhicule.

Ainsi, si le dispositif d'identification se trouve à l'intérieur du véhicule, il subira des mouvements fortement corrélés aux mouvements du véhicule. Ces mouvements sont par exemples causés par le démarrage du moteur du véhicule, ou par l'affaissement des suspensions du véhicule suite à l'entrée d'une personne dans le véhicule. Les accélérations mesurées par les premier et deuxième capteurs seront donc fortement corrélées.

Si au contraire le dispositif d'identification ne se trouve pas à l'intérieur du véhicule, il subira des mouvements indépendants des mouvements du véhicule. Par exemple il subira les mouvements de la personne portant le dispositif d'identification, alors que le véhicule est immobile ou subit de faibles vibrations causées par le mouvement d'objets dans son environnement. Les accélérations mesurées par les premier et deuxième capteurs seront donc indépendantes et non-corrélées.

La comparaison du signal de mesure et du signal de référence permet donc de déterminer si le dispositif d'identification se trouve dans le véhicule.

Le piratage par boîtier relais de ce système est impossible. En effet il impliquerait de mesurer les mouvements du véhicule et de créer des mouvements correspondant au niveau du dispositif d'identification, porté par l'utilisateur, ce qui implique nécessairement un appareil mécanique encombrant et visible, donc incompatible avec la discrétion nécessaire aux pirates. De plus, l'utilisateur percevrait les mouvements.

De préférence, le premier capteur est apte à mesurer une accélération angulaire, le signal de mesure dépendant du module du vecteur rotation fourni par le premier capteur, le deuxième capteur étant apte à mesurer une accélération angulaire, le signal de référence dépendant du module d'un vecteur rotation fourni par le deuxième capteur.

Avantageusement, le premier capteur est apte à mesurer une accélération linéaire selon au moins une direction, le signal de mesure dépendant du module d'un vecteur d'accélération fourni par le premier capteur, le deuxième capteur étant apte à mesurer une accélération linéaire selon au moins une direction, le signal de référence dépendant du module d'un vecteur d'accélération fourni par le deuxième capteur.

Le fait de prendre en compte le module du vecteur rotation ou du vecteur d'accélération permet de constater une corrélation entre les mouvements du dispositif d'identification et les mouvements du véhicule, même quand l'orientation du premier capteur ne correspond pas à celle du deuxième capteur.

Selon un mode de réalisation particulier, le comparateur comporte une mémoire, ledit comparateur étant apte à mémoriser ledit signal de mesure et ledit signal de référence dans ladite mémoire pendant au moins une période de comparaison.

De préférence, ladite unité centrale est apte à être reliée à un capteur pour recevoir dudit capteur un signal de déclenchement, ledit comparateur étant apte à mémoriser ledit signal de mesure et ledit signal de référence pendant une période de comparaison débutant sensiblement à la réception dudit signal de déclenchement.

Avantageusement, ledit capteur produisant ledit signal de déclenchement est un capteur de poigné de portière sensible à l'actionnement d'une poignée de portière.

Ainsi, il est possible de constater une corrélation entre les signaux de mesure et de référence pendant que l'utilisateur pénètre dans le véhicule. On peut donc autoriser le démarrage dés qu'il est installé.

Selon un mode de réalisation particulier, ledit capteur produisant ledit signal de déclenchement est un bouton d'actionnement destiné à commander le démarrage dudit véhicule.

De préférence, le système comporte un bouton d'actionnement destiné à commander le démarrage dudit véhicule, ledit comparateur étant apte à mémoriser ledit signal de mesure et ledit signal de référence pendant une période de comparaison terminant après l'actionnement dudit bouton d'actionnement.

Ainsi, on s'assure qu'il existe, pendant une période de comparaison, des vibrations d'amplitude suffisante pour obtenir une mesure fiable. Si, après le démarrage du moteur, on constate qu'il n'y a pas de corrélation entre les signaux de mesure et de référence, on peut stopper le moteur.

Avantageusement, ladite unité centrale est apte à détecter le démarrage d'un moteur dudit véhicule, ledit comparateur étant apte à mémoriser ledit signal de mesure et ledit signal de référence pendant une période de comparaison terminant après ledit démarrage.

Selon un mode de réalisation particulier, ledit comparateur est apte à déterminer un niveau de corrélation entre une enveloppe temporelle dudit signal de mesure et une enveloppe temporelle dudit signal de référence, lesdits moyens de localisation étant aptes à déterminer la localisation dudit dispositif d'identification à l'intérieur ou à l'extérieur dudit véhicule en fonction dudit niveau de corrélation.

De préférence, ledit dispositif d'identification comprend un capteur de pression apte à mesurer des variations de pression dans l'environnement dudit dispositif d'identification dans un domaine de fréquences infrasonore, ledit émetteur du dispositif d'identification étant apte à transmettre un signal de réponse dépendant desdites variations de pression mesurées par ledit capteur à ladite unité centrale, ledit comparateur étant apte à comparer ledit signal de réponse avec un signal de référence de pression auquel sont corrélées des variations de pression dans ledit espace intérieur dans un domaine de fréquences infrasonore afin de déterminer la localisation dudit dispositif d'identification à l'intérieur ou à l'extérieur dudit espace intérieur.

Avantageusement, ledit système de commande comporte un capteur combiné de pression et d'accélération constituant ledit premier capteur et ledit capteur de pression et dont le signal de mesure combiné constitue ledit signal de mesure et ledit signal de réponse, ledit deuxième capteur étant un deuxième capteur combiné de pression et d'accélération apte à mesurer des variations de pression dans un espace intérieur dudit véhicule dans un domaine de fréquences infrasonore, ledit signal de référence et ledit signal de référence de pression étant constitués d'un unique signal de référence mesuré par ledit deuxième capteur combiné de pression et d'accélération.

L'invention fournit également un procédé de commande d'un système de commande dit mains libres pour véhicule, ledit système comprenant une unité centrale de commande embarquée sur ledit véhicule et un dispositif d'identification destiné à être porté par un utilisateur, ledit procédé comportant les étapes consistant à :
- mesurer une accélération dudit dispositif d'identification,
- transmettre des signaux à distance et sans fil depuis ledit dispositif d'identification à ladite unité centrale de commande, lesdits signaux incluant un signal de mesure dépendant de ladite accélération dudit dispositif d'identification,
- mesurer une accélération dudit véhicule et mettre à disposition de ladite unité centrale un signal de référence dépendant de ladite accélération dudit véhicule,
- déterminer la localisation dudit dispositif d'identification à l'intérieur ou à l'extérieur dudit véhicule en fonction dudit signal de mesure et dudit signal de référence,
- autoriser ou empêcher le démarrage dudit véhicule et/ou commander des moyens de condamnation/décondamnation des serrures des ouvrants dudit véhicule en fonction de la localisation dudit dispositif d'identification à l'intérieur ou à l'extérieur dudit véhicule.

Un autre objet de l'invention est un capteur combiné d'accélération et d'ondes de pression, comprenant un condensateur variable constitué d'une électrode de mesure et d'une membrane conductrice déformable par des variations de pressions, ledit condensateur variable étant connecté à un circuit de mesure apte à produire un signal de mesure correspondant à des variations de capacité dudit condensateur variable, caractérisé par le fait qu'il comprend au moins une masse fixée à ladite membrane conductrice de manière à déformer ladite membrane conductrice en réaction à une accélération dudit capteur combiné.

De préférence, le centre de gravité de ladite au moins une masse est situé à distance de ladite membrane.

Avantageusement, le capteur combiné comprend un boîtier, ladite membrane conductrice étant fixée audit boîtier, ladite au moins une masse étant reliée audit boîtier par un bras rigide lié audit boîtier de manière à pouvoir pivoter selon un axe de pivotement.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :
- la figure 1 est une représentation schématique d'un véhicule équipé d'un système de commande mains libres selon un premier mode de réalisation du premier objet de l'invention,
- la figure 2 est une représentation schématique d'un véhicule équipé d'un système de commande mains libres selon un deuxième mode de réalisation du premier objet de l'invention,
- la figure 3 est une représentation schématique de l'unité centrale et du dispositif d'identification du système de commande mains libres de la figure 2,
- la figure 4 représente la variation temporelle de plusieurs signaux du système de commande mains libres de la figure 2,
- la figure 5 représente plusieurs diagrammes dits « diagramme de l'oeil », correspondant aux signaux de la figure 4,
- la figure 6 est une représentation schématique d'un véhicule équipé d'un système de commande mains libres selon un troisième mode de réalisation du premier objet de l'invention,
- la figure 7 est une représentation schématique de l'unité centrale et du dispositif d'identification du système de commande mains libres de la figure 6,
- la figure 8 représente une vue de côté du véhicule de la figure 6 selon une variante du troisième mode de réalisation,
- la figure 9 est une représentation schématique d'un véhicule équipé d'un système de commande mains libre selon un mode de réalisation du deuxième objet de l'invention,
- la figure 10 représente, vu en coupe selon la ligne brisée X-X, un capteur d'accélération et infrasonore combiné pouvant être utilisé dans le mode de réalisation de la figure 9
- la figure 11 représente le capteur de la figure 10, vu de dessus,
- la figure 12 représente le capteur de la figure 10 avec sa membrane dans un état déformé
- la figure 13 représente le circuit de mesure du capteur de la figure 9.

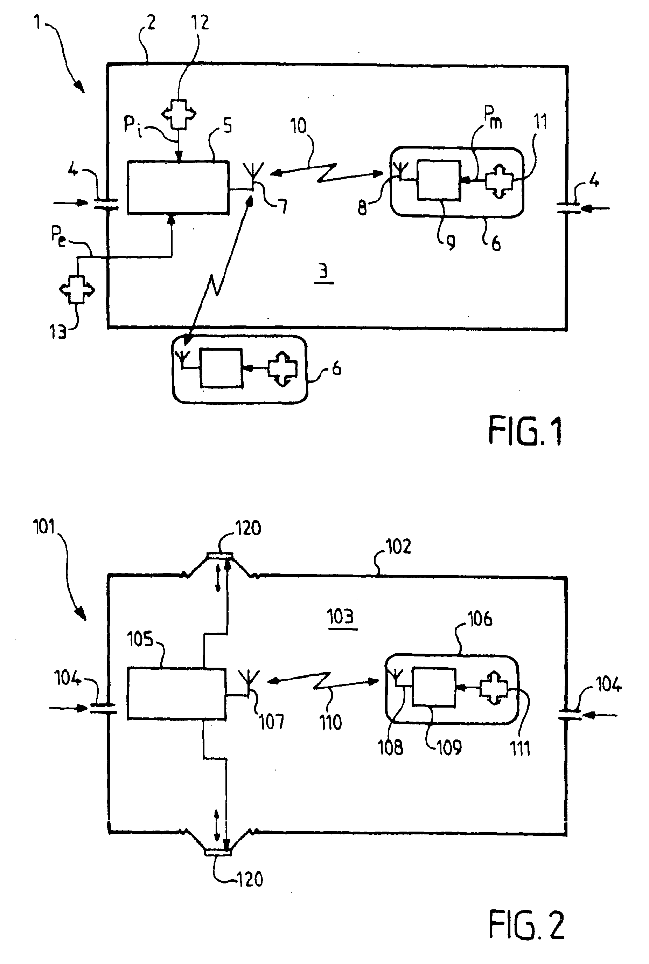

Un premier mode de réalisation de l'invention, appelé mode passif, est représenté sur la figure 1. Un véhicule 1 comprend une paroi 2 délimitant un espace intérieur 3. La paroi 2 comprend par exemple le toit, le plancher, les portières, les vitres, etc. du véhicule 1.

L'air présent dans l'espace intérieur 3 subit des variations de pression dans un domaine de fréquences infrasonore. De même, l'air présent à l'extérieur du véhicule 1 subit des variations de pression dans un domaine de fréquences infrasonore. Dans le cadre de cette description, on entend par « domaine de fréquences infrasonore » les fréquences inaudibles pour un humain, c'est-à-dire inférieures à 40 Hz. Ces vibrations sont causées par toutes sortes d'évènements survenant dans ou hors du véhicule, par exemple par le mouvement de personnes ou d'objet dans l'environnement du véhicule, ou par le vent.

La paroi 2 n'est pas parfaitement isolante aux vibrations infrasonores, mais présente des fuites schématisées par les ouvertures 4. Toutefois, lorsque tous les ouvrants du véhicule 1 (portières, haillon de coffre, toit ouvrant, etc.) sont clos, ces fuites sont très faibles. Ainsi, dans ces conditions, la paroi 2 forme un bon écran à la transmission des variations de pression entre l'extérieur du véhicule 1 et l'espace intérieur 3. Ainsi, les variations de pression dans un domaine de fréquences infrasonore dans l'espace intérieur 3 sont très différentes de celles à l'extérieur du véhicule 1.

Le véhicule 1 est équipé d'un système de commande mains libres. Le système de commande mains libres comprend une unité centrale 5 embarquée dans le véhicule 1 et un dispositif d'identification 6 destiné à être porté par un utilisateur du véhicule. Sur la figure 1, le dispositif d'identification 6 est représenté deux fois : une fois dans l'espace intérieur 3 et une fois à l'extérieur du véhicule 1, à proximité de la paroi 2.

L'unité centrale 5 comprend un émetteur/récepteur (non représenté) connecté à une antenne 7 embarquée sur le véhicule 1. Le dispositif d'identification comprend un contrôleur 9 qui comporte un émetteur/récepteur connecté à une antenne 8 intégrée au dispositif d'identification 6. Ainsi, l'unité centrale 5 et le dispositif d'identification 6 sont aptes à établir une communication électromagnétique bidirectionnelle, représentée par la double flèche 10, pour échanger des messages. Par exemple, suite à un événement déclencheur comme le fait qu'un utilisateur ait touché la poignée d'une des portes du véhicule 1, l'unité centrale échange des messages avec le dispositif d'identification selon un procédé cryptographique connu, pour authentifier le dispositif d'identification. La fréquence porteuse de la communication 10 est par exemple 125 kHz pour la liaison depuis l'unité centrale 5 vers le dispositif d'identification 6, et 13 MHz pour la liaison depuis le dispositif d'identification 6 vers l'unité centrale 5.

Le dispositif d'identification comporte un capteur infrasonore 11. Le capteur infrasonore 11 est apte à mesurer des variations de pression dans l'environnement du dispositif d'identification 6 dans un domaine de fréquences infrasonore. A cet effet, le capteur 11 comporte par exemple un microphone à effet électret. Le capteur 11 émet un signal de mesure vers le contrôleur 9.

Le contrôleur 9 comprend un convertisseur analogique/numérique apte à échantillonner et numériser le signal de mesure. L'émetteur/récepteur du contrôleur 9 est apte à transmettre à l'unité centrale 5 un signal de réponse qui correspond au signal de mesure échantillonné et numérisé, par l'intermédiaire de la communication électromagnétique 10. De préférence, le signal de réponse est transmis de manière cryptée à l'aide d'une clé préalablement échangée entre l'unité centrale 5 et le dispositif d'identification 6.

Alternativement à ce qui vient d'être décrit, le signal de mesure émis par le capteur infrasonore 11 pourrait être transmis à l'unité centrale 5 de manière analogique, par exemple sous la forme d'un signal de réponse modulant la porteuse de la communication 10.

Le système de commande mains libres comporte également un capteur infrasonore intérieur 12, agencé dans l'espace intérieur 3, et un capteur infrasonore extérieur 13, embarqué sur le véhicule 1 et agencé à l'extérieur de l'espace intérieur 3. Les capteurs 12 et 13 sont de préférence fixés à l'aide de moyens de découplage, par exemple des supports en élastomères, afin de découpler suffisamment les capteurs 12 et 13 de la structure du véhicule. On évite ainsi que la structure ne transmette au capteur 12, respectivement 13, les vibrations produites à l'extérieur du véhicule 1, respectivement à l'intérieur du véhicule 1. Les capteurs 12 et 13 sont connectés à l'unité centrale 5. Ils sont par exemple identiques au capteur 11.

Suite à l'événement déclencheur mentionné ci-dessus, et si le dispositif d'identification 6 a été correctement authentifié, le dispositif d'identification 6 transmet à l'unité centrale 5 le signal de réponse correspondant au signal de mesure émis par le capteur 11. L'unité centrale 5 dispose donc d'un signal de référence intérieur Pᵢ, provenant du capteur 12, d'un signal de référence extérieur Pₑ, provenant du capteur 13, et d'un signal de mesure Pₘ, provenant du capteur 11.

Comme expliqué ci-dessus, les variations de pression dans un domaine de fréquences infrasonore dans l'espace intérieur 3 sont très différentes de celles à l'extérieur du véhicule 1. Ainsi, si le dispositif d'identification 6 se trouve dans l'espace intérieur 3, le signal de mesure est très différent du signal de référence extérieur et très ressemblant, voire identique, au signal de référence intérieur. A l'inverse, si le dispositif d'identification 6 se trouve à l'extérieur du véhicule 1, le signal de mesure est très différent du signal de référence intérieur et très ressemblant, voire identique, au signal de référence extérieur.

En comparant ces signaux, l'unité centrale 5 est apte à déterminer la localisation du dispositif d'identification à l'intérieur ou à l'extérieur de l'espace intérieur 3 et peut autoriser ou empêcher le démarrage du véhicule 1 et/ou commander des moyens de condamnation/décondamnation des serrures des ouvrants du véhicule 1 en fonction de cette localisation. Par exemple, l'unité centrale 5 comprend des moyens de calcul apte à déterminer d'une part la valeur efficace de la différence entre le signal de référence intérieur Pᵢ et le signal de mesure Pₘ, et d'autre part la valeur efficace de la différence entre le signal de référence extérieur Pₑ et le signal et mesure Pₘ, soit Si = (Pᵢ - P ₘ)ᵣₘₛ et Sₑ = (Pₑ - Pₘ)ᵣₘₛ, où rms désigne la valeur quadratique moyenne du signal. Si Sᵢ < Sₑ, l'unité centrale 5 détermine que le dispositif d'identification 6 est localisé dans l'espace intérieur 3. Inversement, si Sᵢ > Sₑ, l'unité centrale 5 détermine que le dispositif d'identification 6 est localisé à l'extérieur du véhicule 1. Alternativement, les moyens de calcul pourraient par exemple effectuer une comparaison des signaux de référence et de mesure en calculant des produits de convolution des signaux ou en effectuant une analyse dans le domaine spectral, le but étant à chaque fois de déterminer avec lequel des signaux Pᵢ et Pₑ le signal Pₘ présente la plus forte ressemblance.

Il est à signaler que les capteurs 11, 12 et 13 peuvent fournir par exemple un signal proportionnel aux variations de pression qu'ils mesurent, ou un signal proportionnel à la dérivée temporelle de ces variations de pression. Il est équivalent de connaître un signal lui-même ou sa dérivée. Dans le deuxième cas, l'opération de comparaison peut porter sur les signaux de référence et de mesure eux même, proportionnels aux dérivées temporelles des variations de pression mesurées, ou sur ces signaux après intégration.

Un deuxième mode de réalisation de l'invention, appelé mode actif-1, est décrit en référence aux figures 2 à 5. Les éléments identiques ou similaires à des éléments du mode passif sont désignés par les même chiffres de référence, augmentés de 100.

Comme dans le mode passif, le véhicule 101 comprend une paroi 102 délimitant un espace intérieur 103 et présentant des fuites 104. Un système de commande mains libres comprend une unité centrale 105 apte à établir une communication électromagnétique 110 avec un dispositif d'identification 106 grâce à des antennes 107, 108. Le dispositif d'identification 106 comporte un capteur de pression infrasonore 111 et un contrôleur 109. Les différences entre le mode passif et le mode actif-1 sont expliquées ci-dessous.

Le système de commande du mode actif-1 ne comporte pas de capteur de pression intérieur ni extérieur. L'unité centrale 105 est connectée à deux haut-parleurs 120 par l'intermédiaire d'une interface de sortie non représentée. Alternativement elle pourrait être connectée à un seul ou à plus de deux haut-parleurs. De préférence, les haut-parleurs 120 sont les haut-parleurs de l'autoradio du véhicule 101. Alternativement il s'agit de haut-parleurs spécifiques au système de commande mains libres. Les haut-parleurs 120 sont aptes à générer des variations de pression dans l'espace intérieur 103, sous le contrôle de l'unité centrale 105.

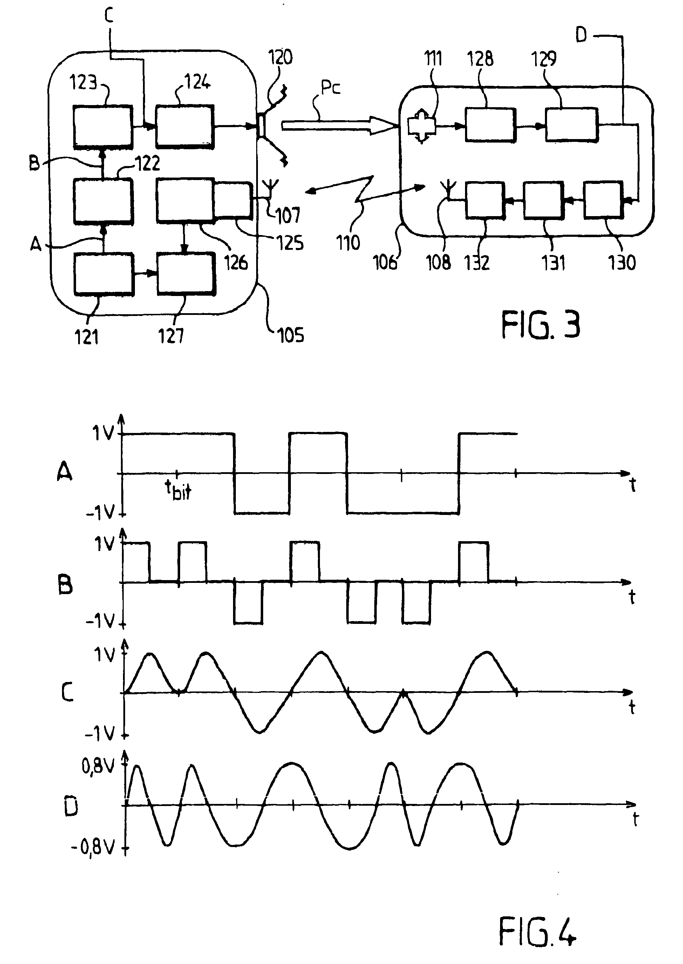

La figure 3 est une représentation plus détaillée de l'unité centrale 105 et du dispositif d'identification 106. On décrit ci-dessous les aspects fonctionnels de l'unité centrale 105 et du dispositif d'identification. En pratique, les éléments qui remplissent ces fonctions peuvent être réalisés sous la forme d'un circuit électronique générique programmé de manière spécifique, d'un circuit électronique spécifique, ou d'une combinaison des deux. Ils peuvent être réalisés de manière centralisée ou distribuée. Ceci s'applique aussi aux éléments correspondant des autres modes de réalisation.

L'unité centrale 121 comprend un générateur de nombre aléatoire 121. Ce générateur 121 génère un nombre aléatoire, par exemple un mot binaire de seize bits Sbₜ, et le mémorise. Le générateur 121 émet un signal binaire A correspondant au mot Sbₜ vers un circuit de mise en forme 122. Le circuit de mise en forme 122 change le codage du mot binaire Sbₜ. Pus précisément, il transforme le signal A dans lequel les « 0 » et les « 1 » sont représentés par exemple par les tensions +1V et -1V respectivement, en un signal B du type Non Retour à Zéro (NRZ), qui présente une moyenne nulle. Le signal B est filtré par un filtre passe-bas 123 qui ne laisse passer que les fréquences infrasonores, et dont le signal de sortie C est appliqué, par l'intermédiaire d'un amplificateur 124, aux haut-parleurs 120. Dans les signaux A, B et C, les bits sont transmis à une vitesse comprise de préférence entre 10 et 40 bits par seconde. Par exemple, à une vitesse de 20 bits par seconde, il faut 0,8 secondes pour transmettre le mot binaire Sbₜ de seize bits.

Le circuit de mise en forme 122 permet d'obtenir, à partir du signal A, un signal C de valeur moyenne nulle. Ainsi, le signal de commande des haut-parleurs 120 ne comporte pas de composante continue, ce qui évite que les membranes des haut-parleurs 120 soient décalées en permanence par rapport à leur position de repos, ce qui pourrait conduire à des phénomènes de saturation. Le filtre passe-bas 123 permet de couper les fréquences supérieures à 40Hz. Les variations de pression générées par les haut-parleurs 120 sont donc inaudibles, ce qui évite toute gêne ou interférence avec un signal sonore pouvant être émis par les haut-parleurs 120, par exemple de la musique.

Le signal C est émis par les haut-parleurs 120 dans l'espace intérieur 103. Ainsi, les variations de pression infrasonores dans l'espace 103 comprennent une composante infrasonore P_{c} correspondant au signal C, et éventuellement une composante correspondant au bruit ambiant qu'on peut appeler composante de bruit infrasonore. Dans le domaine infrasonore, le bruit ambiant sera généralement de très faible amplitude, surtout à l'intérieur de l'habitacle clos du véhicule 101, surtout à moteur éteint. A l'extérieur du véhicule C, les variations de pression infrasonore ne comprennent pas la composante P_{c}. On entend par là que la composante correspondant au signal C dans l'espace intérieur 103 est atténuée par la paroi 2 suffisamment fortement pour que le capteur 111, dont le seuil de sensibilité à été réglé à cet effet, ne peut pas détecter cette composante quand le dispositif 106 est à l'extérieur du véhicule 101 et que celui-ci est clos.

Le dispositif d'identification 106 comprend un amplificateur 128 qui amplifie le signal émis par le capteur infrasonore 111 et est connecté à un filtre 129 ne laissant passer que les fréquences infrasonores. La figure 4 représente les signaux A, B et C pour une durée de quelques temps bits t_{bit}, ainsi que le signal D à la sortie du filtre 129, dans le cas où le dispositif d'identification se trouve dans l'espace intérieur 103. Du fait des propriétés du capteur 111 à effet électret, le signal D correspond à la dérivée temporelle du signal P_{c}, et donc du signal C. Cela a pour effet de changer le codage du mot binaire Sbₜ en un codage du type Manchester.

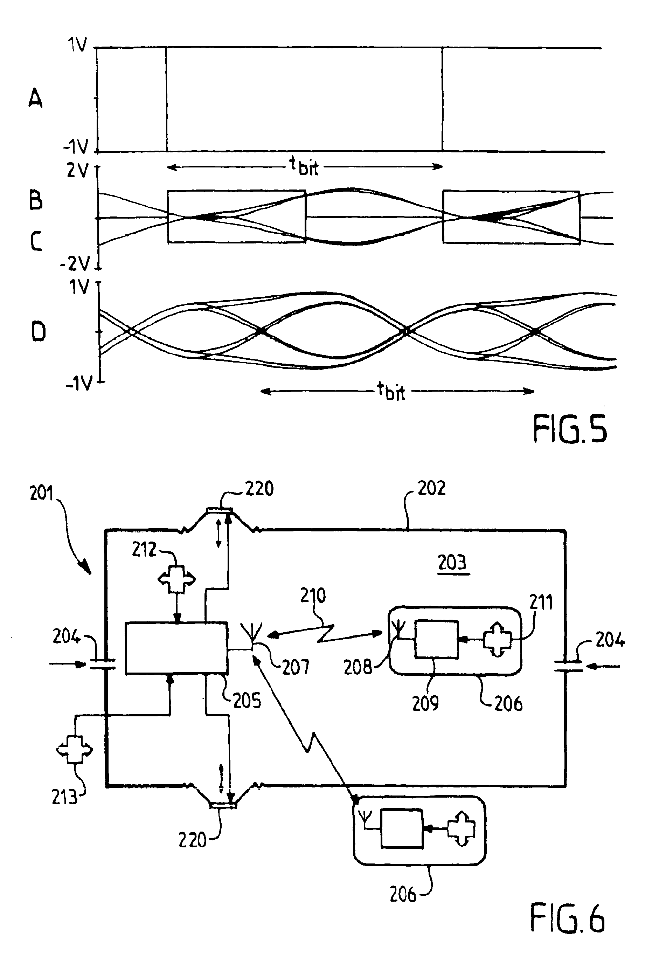

La figure 5 représente les signaux de la figure 4, dans une représentation appelée « diagramme de l'oeil ». En d'autres mots, plusieurs tronçons temporels des signaux sont représentés de manière superposée et synchronisée avec le temps bits t_{bit}. Du fait du temps de propagation entre l'unité centrale 105 et le dispositif d'identification 106, le signal D est temporellement en retard par rapport aux signaux A, B, et C. Ce retard n'est pas représenté sur la figure 4 pour faciliter la comparaison des signaux.

Le dispositif d'identification 106 comprend un détecteur de bit 130, qui reçoit en entrée le signal D. Comme on peut le voir sur les figures 4 et 5, le signal D est supérieur à 0V au cours du premier demi-temps bit dans le cas de bit « 1 », et inférieur à 0V au cours du premier demi-temps bit dans le cas d'un bit « 0 ». Le détecteur de bit 130 peut donc identifier un mot binaire M dans le signal D.

Le fait que « l'oeil » soit bien ouvert dans le cas du signal D de la figure 5 signifie que le mot M détecté par le détecteur de bit 130 correspond au mot Sbₜ avec une faible probabilité d'erreur. Bien entendu, ceci n'est vrai que dans le cas ou le dispositif d'identification 106 se trouve dans l'espace intérieur 103. Si le dispositif d'identification 106 se trouve à l'extérieur du véhicule 101, les variations de pression mesurées par le capteur 111 ne comprend pas de composante correspondant au signal C. Le signal D sera quelconque et le détecteur de bit 130 donnera en sortie un mot M aléatoire, ou, en tous cas, indépendant du mot Sbₜ.

Le dispositif d'identification 106 comprend un codeur 131 qui crypte le mot M à l'aide par exemple d'une clé de chiffrement symétrique préalablement échangée entre l'unité centrale 105 et le dispositif 106. Le mot M est alors transmis de manière cryptée à l'unité centrale 105 par l'intermédiaire de l'émetteur/récepteur 132 et de l'antenne 108 du dispositif 106. Les éléments 128 à 132 font partie du contrôleur 109.

L'unité centrale 105 comprend un émetteur/récepteur 125 et un décodeur 126 permettant de retrouver le mot M dans le signal reçu par l'antenne 107. L'unité centrale 105 dispose donc du mot Sbₜ mémorisé par le générateur 121 et du mot M décrypté par le décodeur 126. L'unité centrale comprend un comparateur 127 qui compare le mot M et le mot Sbₜ pour déterminer si le dispositif d'identification est localisé à l'intérieur de l'espace 103 ou non. Par exemple, le comparateur 127 considère que le dispositif d'identification 106 est situé dans l'espace intérieur 103 si la distance de Hamming, c'est-à-dire le nombre de bits différents entre les mots Sbₜ et M, est inférieure à un seuil donnée. Dans le cas de mots de seize bits, le seuil donné est par exemple 0, signifiant que Sbₜ et M sont égaux, ou encore 1 ou 2, autorisant une petite erreur lors de la détection du mot M.

Comme expliqué ci-dessus, il faut, dans cet exemple, environ 0,8 secondes pour transmettre le mot Sbₜ de l'unité centrale 105 au dispositif d'identification 106. La communication dans l'autre sens se fait par ondes électromagnétiques. Le mot M peut donc être transmis du dispositif d'identification 106 à l'unité centrale 105 en un temps négligeable par rapport à ces 0,8 secondes. Ce temps de 0,8 secondes est donc le temps minimum nécessaire pour localiser le dispositif 106 et constitue donc un temps minimal qui s'écoule entre le moment où l'utilisateur portant le dispositif 106 déclenche le protocole de démarrage mains libres et le moment où est mis en marche le moteur du véhicule 101. Si par exemple, le protocole est déclenché lorsque l'utilisateur entre dans l'espace intérieur 103, une durée de 0,8 secondes est limitée en comparaison du temps nécessaire pour s'installer ou mettre la ceinture de sécurité et n'est pas considérée comme gênante. Dans tous les cas, cette durée devrait être inférieure à 5 secondes, de préférence inférieure à 2 secondes.

Depuis l'évènement déclencheur mentionné ci-dessus, l'unité centrale 105 génère de manière répétée le mot Sbₜ dans l'espace intérieur 103. A une périodicité donnée, le générateur 121 peut éventuellement générer et mémoriser un nouveau mot Sbₜ, afin d'améliorer la protection contre le piratage.

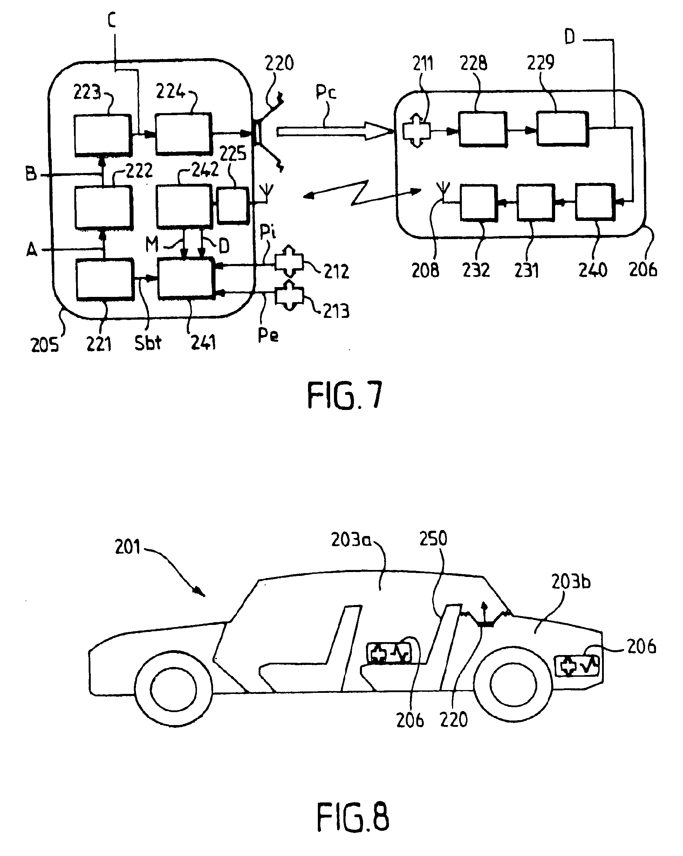

Un troisième mode de réalisation de l'invention, appelé mode actif-2, est décrit en référence aux figures 6 à 8. Les éléments identiques ou similaires à des éléments du mode passif ou du mode actif-1 sont désignés par les même chiffres de référence, augmentés respectivement de 200 ou de 100.

Le mode actif-2 peut être considéré comme une combinaison du mode passif et du mode actif-1. En effet, le système de commande main libre du véhicule 201 comprend des haut-parleurs 220, un capteur infrasonore intérieur 212, agencé dans l'espace intérieur 203, et un capteur infrasonore extérieur 213, embarqué sur le véhicule 201 et agencé à l'extérieur de l'espace intérieur 203. Les capteurs 212 et 213 sont connectés à l'unité centrale 205.

Comme l'unité centrale 105 du mode actif-1, l'unité centrale 205 commande les haut-parleurs 220 pour que les variations de pression infrasonores dans l'espace intérieur 203 comprennent une composante P_{c} correspondant à un mot binaire Sbₜ. Le dispositif d'identification 206 détermine un signal D à l'aide du capteur 211, de l'amplificateur 228 et du filtre 229. Les signaux A, B, C et D des figures 4 et 5, décrits en référence au mode actif-1, sont inchangés dans le cas du mode actif-2.

Le dispositif d'identification 206 comporte un convertisseur analogique/numérique 240 qui échantillonne et numérise le signal D. Ainsi, le signal D est converti en un signal de réponse correspondant au signal D échantillonné et numérisé. Il s'agit d'un échantillonnage à plusieurs niveaux et à une fréquence nettement supérieure à la fréquence de modulation du signal D car, outre le contenu logique du signal D, à savoir le mot Sbₜ, le signal de réponse doit aussi contenir le contenu analogique du signal D, à savoir une mesure quantitative de l'amplitude du signal D et de sa variation dans le temps.

Le dispositif d'identification 206 comprend un codeur 231 qui crypte le signal de réponse à l'aide par exemple d'une clé préalablement échangée entre l'unité centrale 205 et le dispositif 206. Le signal de réponse est alors transmis de manière cryptée à l'unité centrale 205 par l'intermédiaire de l'émetteur/récepteur 232 et de l'antenne 208 du dispositif 206.

L'unité centrale 205 comprend un émetteur/récepteur 225 et un circuit de traitement 242. Le circuit de traitement 242 reçoit le signal reçu par l'antenne 207 et effectue deux opérations. Premièrement il décode le signal de réponse qui a été reçu de manière cryptée. Le circuit de traitement dispose alors du signal de réponse produit par le convertisseur 240, c'est-à-dire d'une forme numérisée du signal D. D'une manière similaire au décodeur de bit 130 du mode actif-1, le circuit de traitement 242 identifie un mot binaire M dans le signal D.

L'unité centrale 205 dispose donc, au niveau du comparateur 241, du mot binaire M provenant du circuit 242, du mot binaire Sbₜ provenant du générateur 221, d'un signal de référence intérieur provenant du capteur 212, d'un signal de référence extérieur provenant du capteur 213, et du contenu analogique du signal D, provenant aussi du circuit 242.

Comme dans le mode actif-1, en comparant les mots M et Sbₜ, l'unité centrale 205 peut déterminer la localisation du dispositif d'identification 206. Comme dans le mode passif, en comparant les signaux de référence intérieur et extérieur avec le contenu analogique du signal D, l'unité centrale 205 peut déterminer la localisation du dispositif d'identification 206. Cette double détermination de localisation offre une protection accrue contre le piratage par boîtier relais. Alternativement, l'unité centrale 205 pourrait n'utiliser qu'une de ces deux méthodes de localisation, par exemple en fonction d'un commutateur actionnable par l'utilisateur du véhicule 201. Le système peut ainsi offrir un mode de fonctionnement favorisant la sécurité, dans lequel la condition de localisation du dispositif 206 pour le démarrage mains libres doit être satisfaite par les deux méthodes de localisation ; et un autre mode de fonctionnement favorisant le confort d'utilisation, dans lequel la condition de localisation est considérée satisfaite dés que l'une des deux méthodes donne un résultat positif.

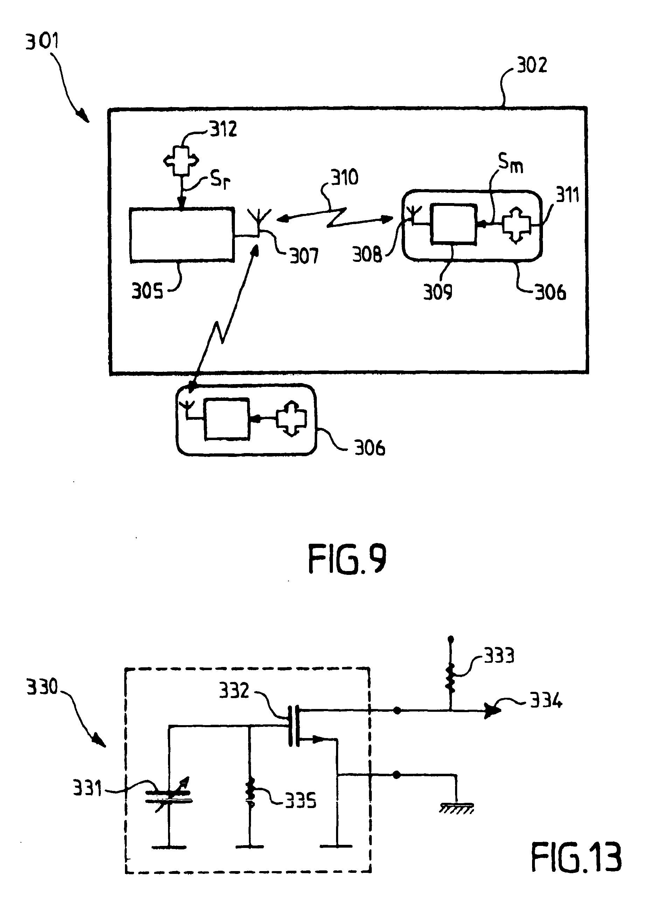

La figure 8 représente schématiquement une variante de réalisation du véhicule 201, vu de côté. Les haut-parleurs 220 sont ici agencés sur la paroi de plage arrière qui sépare l'espace intérieur 203 en un habitacle 203a et un coffre 203b. Cette paroi et les dossiers 250 des sièges arrières forment généralement un bon écran à la transmission des variations de pression infrasonores. Ainsi, les variations de pression infrasonores générées par les haut-parleurs 220 dans l'habitacle 203a sont en opposition de phase par rapport à celle dans le coffre 203b. Si le dispositif d'identification 206 est situé dans le coffre 203b, le signal D sera en opposition de phase par rapport à ce qu'il aurait été si le dispositif 206 avait été dans l'habitacle 203a, et le mot M détecté par le circuit 242 aura tous ses bits inversés. Ainsi, le comparateur 241 peut déterminer si le dispositif d'identification est localisé dans l'habitacle 203a, dans le coffre 203b, ou à l'extérieur du véhicule 201 : Le comparateur 241 calcule la distance de Hamming entre Sbₜ et M. Si les mots M et Sbₜ sont égaux, éventuellement à un ou deux bits d'erreur près, c'est que le dispositif 206 est dans l'habitacle 203a. En d'autres mots, si la distance de Hamming entre Sbₜ et M est inférieure à un seuil donné, le comparateur 241 détermine que le dispositif 206 est dans l'habitacle 203a. Si ce n'est pas le cas, le comparateur calcule la distance de Hamming entre Sbₜ et non(M), l'inverse logique du mot M. Si non(M) et le mot Sbₜ sont égaux, éventuellement à un ou deux bits d'erreur près, c'est que le dispositif 206 est dans le coffre 203b. En d'autres mots, si la distance de Hamming entre Sbₜ et non(M) est inférieure à un seuil donné, le comparateur 241 détermine que le dispositif 206 est dans le coffre 203b. Enfin si les mots M et Sbₜ sont non corrélé, c'est que le dispositif 206 est à l'extérieur du véhicule 201. Cette détermination basée sur les mots binaires est aussi applicable au mode actif-1.

Selon une variante de réalisation, le comparateur 241 peut également déterminer si le dispositif d'identification est localisé dans l'habitacle 203a, dans le coffre 203b, ou à l'extérieur du véhicule 201, sur base des signaux de référence intérieur Pᵢ et extérieur Pₑ et contenu analogique du signal D. Selon cette variante, le capteur de référence intérieur 212 est agencé dans l'habitacle 203a. Ainsi, si le signal D est très ressemblant au signal de référence intérieur Pᵢ, c'est que le dispositif 206 est situé dans l'habitacle 203a. Si le signal D, une fois inversé en phase, est très ressemblant au signal de référence intérieur Pᵢ, c'est que le dispositif 206 est situé dans le coffre 203b. Enfin, si le signal D est plus proche du signal de référence extérieur Pₑ, c'est que le dispositif 206 est à l'extérieur du véhicule 1.

Alternativement à ce qui vient d'être décrit, dans le cas où les haut-parleurs 220 ne sont pas agencés sur une paroi qui sépare l'habitacle 203a du coffre 203b, on peut utiliser un haut-parleur supplémentaire (non représenté) agencé dans le coffre 203b. Les haut-parleurs 220 et le haut-parleur supplémentaire sont excités de manière séquentielle, et les signaux sont traités de la manière qui vient d'être décrite. En fonction du moment auquel on localise le dispositif 206 dans l'espace intérieur 203, on peut déterminer s'il est dans l'habitacle 203a ou dans le coffre 203b. Une autre variante, lorsque la structure du véhicule isole fortement l'habitacle du coffre, au point que les signaux infrasonores ne passent pas significativement de l'un à l'autre, consiste à exciter les haut-parleurs 220 et le haut-parleur supplémentaire simultanément mais sur base de deux mots binaires Sb1ₜ et Sb2ₜ différents. Cette variante présente l'avantage de la rapidité, le dispositif 206 pouvant être localisé dés la première émission des mots Sb1ₜ et Sb2ₜ.

L'invention qui vient d'être décrite peut être complétée par une localisation à l'aide par exemple d'antennes boucles présentant des zones de détections spécifiques, permettant par exemple de localiser le dispositif d'identification à l'extérieur du véhicule 1 à proximité d'une portière droite, d'une portière gauche ou du coffre. Pour augmenter la protection contre le piratage, l'invention peut être combinée avec une protection basée sur la mesure d'un décalage temporel de signaux.

Dans une variante du mode actif-2, les variations de pression infrasonores émises par les haut-parleurs 220 sous le contrôle de l'unité centrale 205 sont quelconques. En d'autres mots elles ne comprennent pas de composantes correspondant à un mot binaire déterminé. La localisation du dispositif 206 est alors basée uniquement sur la comparaison des signaux de référence Pᵢ et Pₑ et du contenu analogique du signal D. Cette variante de réalisation peut aussi s'appliquer au mode de réalisation passif, pourvu que le véhicule soit équipé d'un dispositif apte à produire un signal infrasonore, par exemple un autoradio. L'idée est ici de produire artificiellement une excitation infrasonore dans l'espace intérieur du véhicule, sous la commande de l'unité centrale 5 ou 205. Par exemple, cette excitation est créée lorsque, au moment où le dispositif d'identification 6 ou 206 doit être localisé, aucun signal significatif n'est perçu par les capteurs 12 et 13 ou 212 et 213.

Ainsi, même si le bruit ambiant infrasonore dans et hors de l'espace intérieur 3 ou 203 n'est pas très différent, notamment quand le véhicule est dans un environnement très calme, cette variante présente l'avantage de créer une différence entre l'espace intérieur 3 ou 203 et l'extérieur, ce qui augmente la fiabilité. Toutefois, dans le cadre d'un protocole de démarrage mains libres, le conducteur doit normalement accéder préalablement au véhicule, de sorte qu'il devrait normalement se produire au moins un claquement de portière produisant une excitation infrasonore pouvant être exploitée par le système.

Une autre solution au problème de la faible différence que peuvent présenter les variations de pression infrasonores dans et hors de l'espace intérieur ou au problème de l'absence de bruit infrasonore dans et hors du véhicule est de faire démarrer le moteur du véhicule lorsque le dispositif d'identification doit être localisé, ce qui a pour effet de créer des variations de pression infrasonores. Ensuite, après un petit laps de temps, par exemple quelques secondes, on localise le dispositif d'identification. S'il est à l'extérieur, on coupe le moteur. S'il est à l'intérieur, on laisse le moteur allumé.

Un quatrième mode de réalisation de l'invention, appelé mode vibratoire, est décrit en référence à la figure 9. Les éléments identiques ou similaires à des éléments du mode passif sont désignés par les même chiffres de référence, augmentés de 300.

Le véhicule 301 comprend des parois 302. La paroi 302 comprend notamment le plancher et les portières du véhicule 301. La paroi 302 peut être partiellement ouverte, en d'autres mots le véhicule 301 peut être un cabriolet.

Le véhicule 301 comporte un système de commande mains libres. Ce système de commande main libre comprend une unité centrale 305 apte à établir une communication électromagnétique 310 avec un dispositif d'identification 306 grâce à des antennes 307, 308. Le dispositif d'identification 306 comporte un capteur d'accélération 311 et un contrôleur 309.

Le capteur d'accélération 311 peut être un capteur d'accélération angulaire, mesurant l'accélération angulaire selon un, deux ou trois axes, et donnant en sortie un vecteur rotation respectivement à une, deux ou trois dimension. Le vecteur rotation est par exemple représenté par une, deux ou trois tensions électriques, chacune correspondant respectivement à la composante du vecteur rotation selon un des axes de mesures. Alternativement le vecteur rotation est représenté par une seule tension électrique correspondant à son module.

Le capteur d'accélération 311 peut également être un capteur d'accélération linéaire, mesurant l'accélération linéaire selon un, deux ou trois axes, et donnant en sortie un vecteur d'accélération respectivement à une, deux ou trois dimension. Le vecteur d'accélération est par exemple représenté par une, deux ou trois tensions électriques, chacune correspondant respectivement à la composante du vecteur d'accélération selon un des axes de mesures. Alternativement le vecteur d'accélération est représenté par une seule tension électrique correspondant à son module.

Le module du vecteur rotation ou du vecteur d'accélération fournit un signal de mesure Sₘ représentatif de l'accélération du dispositif d'identification 306.

De manière similaire à ce qui est décrit en référence au mode passif ou au mode actif-2, le contrôleur 309 transmet ce signal de mesure Sₘ à l'unité centrale 305, de manière numérisée et cryptée, grâce à l'antenne 308 et à la communication électromagnétique 310. L'unité centrale 305 comprend un décodeur pour décrypter le signal reçu.

Le système de commande comprend également un capteur d'accélération 312, par exemple du même type que le capteur d'accélération 311. Le capteur 312 est fixé à la structure du véhicule 301 de manière subir les mouvements du véhicule 301. Le capteur 312 peut être un capteur spécifique au système de commande main libre, ou être un capteur servant également pour d'autres fonctions de contrôle du véhicule 301. Par exemple le capteur 312 peut également être utilisé pour commander l'enclenchement de coussins de sécurité gonflables (airbag).

Le capteur 312 est relié à l'unité centrale 305. Ainsi, l'unité centrale 305 dispose du signal de mesure Sₘ provenant du capteur 311, et d'un signal de référence Sᵣ provenant du capteur 312.

Si le dispositif d'identification 306 se trouve dans le véhicule 301, il subira des mouvements correspondant aux mouvements du véhicule 301, éventuellement combinés avec les mouvements d'un utilisateur portant le dispositif 306 dans le véhicule. Le signal de mesure Sₘ et le signal de référence Sᵣ comprendront tous les deux une composante correspondant à une accélération du véhicule 301, et seront donc corrélés.

Inversement, si le dispositif d'identification 306 ne se trouve pas dans le véhicule 301, le signal de mesure Sₘ et le signal de référence Sᵣ seront indépendants l'un de l'autre et ne seront donc pas corrélés.

En comparant le signal de mesure Sₘ et le signal de référence Sᵣ, il est donc possible de déterminer si le dispositif d'identification 306 se trouve dans le véhicule 301 ou non.

La comparaison du signal de mesure Sₘ et du signal de référence Sᵣ s'effectue par exemple de la manière suivante.

Suite à un événement déclencheur détecté à l'aide d'un capteur, par exemple l'actionnement d'une poignée de porte ou la fermeture d'une portière, l'unité centrale 305 établi la communication 310 avec le dispositif d'identification 306 pour échanger des messages selon un procédé cryptographique connu, afin d'authentifier le dispositif d'identification 306 et/ou pour lui envoyer un message d'interrogation. Ensuite, le dispositif d'identification 306 commence à transmettre le signal de mesure Sₘ à l'unité centrale 305. L'unité centrale 305 mémorise les signaux reçus et effectue le calcul d'un niveau de corrélation entre le signal de mesure Sₘ et le signal de référence Sᵣ. Plus précisément, l'unité centrale 305 détermine l'enveloppe du signal de mesure Sₘ et du signal de référence Sᵣ. Si le dispositif d'identification 306 se trouve dans le véhicule 301, les enveloppes de signaux Sₘ et Sᵣ présenteront toutes les deux des pics et de zones d'amplitude réduite, de manière corrélée. Le niveau de corrélation peut être calculé en effectuant un produit de corrélation entre ces enveloppes. Alternativement, l'unité centrale 305 peut par exemple calculer la valeur efficace de la différence entre les enveloppes des signaux Sₘ et Sᵣ.

Si le niveau de corrélation ainsi déterminé est supérieur à un niveau seuil, l'unité centrale 305 détermine que le dispositif d'identification 306 est dans le véhicule 301. Si non, l'unité centrale 305 détermine que le dispositif d'identification 306 n'est pas dans le véhicule 301.

Le niveau de corrélation doit être supérieur au niveau seuil pendant au moins une période de comparaison d'une durée déterminée, supérieure à un seuil de durée, par exemple 5 secondes. A cet effet, l'unité centrale 305 mémorise le signal de mesure Sₘ et le signal de référence Sᵣ dans une mémoire et compare ces signaux au cours de plusieurs périodes de comparaison. Par exemple, une des périodes de comparaison débute dès l'événement déclencheur mentionné ci-dessus. Ainsi, le cas échéant, il est possible de localiser rapidement le dispositif d'identification 306 dans le véhicule et d'autoriser le démarrage dès que le conducteur est installé.

Il est possible que les mouvements causés uniquement par l'affaissement des suspensions du véhicule 301 suite à l'entrée d'une personne dans le véhicule 301 soient d'amplitude insuffisante pour pouvoir constater une corrélation entre le signal de mesure Sₘ et le signal de référence Sᵣ. Pour cette raison, selon une variante de réalisation, si le dispositif d'identification 306 a été correctement identifié suite au procédé cryptographique mentionné ci-dessus, l'unité centrale 305 commande le démarrage du moteur du véhicule 301. Ce démarrage peut avoir lieu soit après un temps prédéterminé, par exemple 5 secondes, après l'événement déclencheur, soit suite à l'actionnement d'un bouton de commande prévu à cet effet, placé par exemple sur le tableau de bord du véhicule 301. Une période de comparaison débute lors du démarrage du moteur, et se termine quelques secondes plus tard, par exemple entre 5 et 10 secondes plus tard. Si le niveau de corrélation entre le signal de mesure Sₘ et le signal de référence Sᵣ au cours de cette période de comparaison est supérieur au niveau seuil, le moteur est laissé allumé. Dans le cas contraire, l'unité centrale 305 commande l'arrêt du moteur.

Le système de commande selon le mode vibratoire peut être combiné avec le système de commande selon l'un des modes infrasonores passif, actif-1 ou actif-2. Dans ce cas, le dispositif d'identification 306 comprend un capteur d'accélération 311 et un capteur infrasonore 11, 111 ou 211 et le véhicule comprend aussi au moins un capteur d'accélération et, le cas échéant, des capteurs infrasonores. Dans le cas de ces combinaisons, une double détection de position du dispositif d'identification est mise en oeuvre, ce qui accroît encore la sécurité contre le piratage.

Selon une autre variante, correspondant à la combinaison du mode vibratoire avec le mode infrasonore passif ou le mode infrasonore actif-2, le dispositif d'identification 6 ou 206 comprend un capteur d'accélération et infrasonore combiné. Dans ce cas, au moins un des capteurs 12, 13 ou 212, 213 peut être également un capteur d'accélération et infrasonore combiné.

Dans le cas de ces variantes, le signal de mesure transmis par le dispositif d'identification à l'unité centrale reflète à la fois les variations de pression dans l'environnement du dispositif d'identification et les accélérations qu'il subit. L'unité centrale détermine la localisation du dispositif d'identification en comparant ce signal de mesure à un signal de référence infrasonore intérieur et/ou à un signal de référence infrasonore intérieur et à un signal de référence accéléromètrique. Le signal de mesure d'un capteur d'accélération et infrasonore combiné installé dans le véhicule peut aussi être utilisé comme signal de référence dans ce cas. Un capteur infrasonore extérieur n'est donc pas toujours nécessaire.

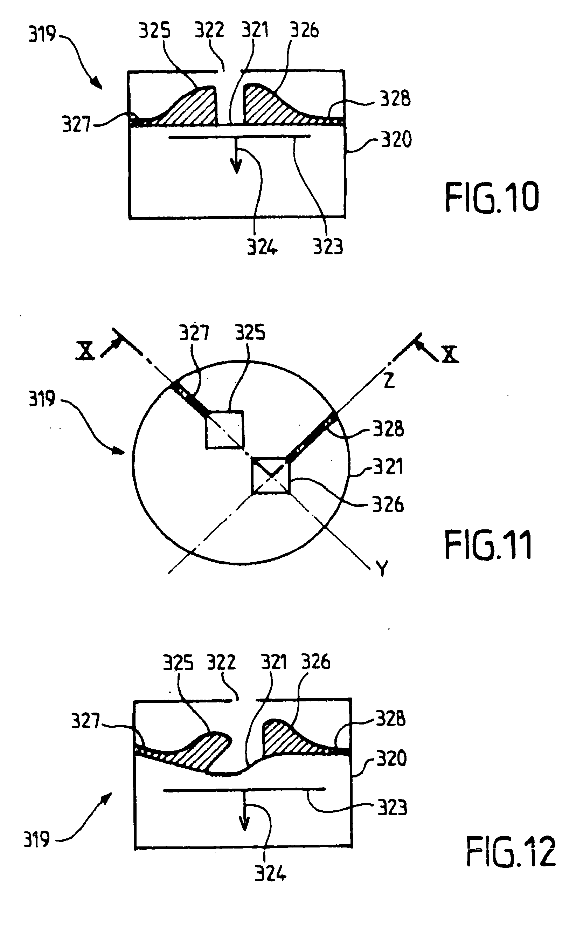

Un exemple de capteur d'accélération et infrasonore combiné 319 est représenté sur les figures 10 à 13. Le capteur 319 est fondé sur le principe du microphone à électret et comprend un boîtier 320 en aluminium, par exemple de forme cylindrique circulaire. Le boîtier 320 présente une ouverture 322 permettant de laisser passer les variations de pression. Une membrane métallisée 321 est agencée à l'intérieur du boîtier 320, et fixée à celui-ci sur sa périphérie. La membrane métallisée 321 est déformable. La figure 10 représente la membrane 321 dans sa position non déformée. La figure 12 représente la membrane 321 dans une position déformée, la déformation ayant été exagérée pour la clarté du dessin.

Une électrode de mesure 323 est constituée par un disque métallique fixé dans le boîtier 320 parallèlement à la membrane métallisée 321, dans sa position non déformée. L'électrode de mesure 323 et la membrane métallisée 321 forment ensemble un condensateur variable qui est connecté à un circuit de mesure 330, comme représenté par la flèche 324. Un exemple de circuit de mesure 330 est représenté sur la figure 13, entouré par des traits interrompus. Il comprend un condensateur variable 331 formé par l'électrode 323 et la membrane 321. L'électrode 323 est connectée à la grille d'un transistor à effet de champ 332 dont les deux autres bornes forment les sorties du capteur, l'une étant reliée à la masse, l'autre étant reliée, par l'intermédiaire d'une résistance 333, par exemple de 2 kΩ, à une source de tension de par exemple +3V. La tension présente à la borne 334 est variable et correspond à des variations de capacité du condensateur 331. Le circuit de mesure 330 comprend également une résistance 335 de plusieurs MΩ.

Sous l'effet de variations de pression, la membrane métallisée 321 se déforme et la capacité du condensateur formé par la membrane 321 et l'électrode 323 varie. Cette variation de capacité est transformée par le circuit de mesure en un signal de sortie, par exemple sous la forme d'une tension électrique variable.

Le capteur 319 comprend deux masses 325 et 326 fixées à la membrane métallisée 321, à proximité du centre de la membrane 321, diamétralement opposées l'une à l'autre. Les masses 325 et 326 sont par exemple des petits volumes de matériau dense tel que du plomb ou un alliage d'étain. Les centres de gravité des masses 325 et 326 sont situés au dessus de la membrane 321.

La masse 325 est également fixée au boîtier 320 par une patte 327 s'étendant selon un axe Y et reliant la masse 325 au boîtier 320, au niveau de la membrane. Ainsi, la masse 325 peut pivoter autour d'un axe de pivotement défini par la fixation de la patte 327 au boîtier 320. De manière similaire, la masse 326 est fixée au boîtier 320 par une patte 328 s'étendant selon un axe Z, perpendiculaire à l'axe Y.

Sous l'effet d'une accélération, les masses 325 et 326 déforment la membrane 321 et la capacité du condensateur formé par la membrane 321 et l'électrode 323 varie. Cette variation de capacité est transformée par le circuit de mesure en un signal de sortie.

Plus précisément, si le capteur 319 subit une accélération selon l'axe verticale de la figure 10, dit axe X, les masses 325 et 326 se déplacent selon cet axe X et déforment la membrane. Si le capteur 319 subit une accélération selon l'axe Y, la masse 325 subira, du fait que son centre de gravité est décalé par rapport à l'axe de pivotement défini par la fixation de la patte 327 au boîtier 320, un couple de pivotement. Ainsi, la masse 325 déforme la membrane 321, comme représenté sur la figure 12, alors que la masse 326 est maintenue par la patte 328. Enfin, si le capteur 319 subit une accélération selon l'axe Z, la masse 326 déforme la membrane 321, alors que la masse 325 est maintenue par la patte 327. Une accélération selon un axe quelconque déforme la membrane 321 par combinaison des trois effets ci-dessus.

Ainsi, une accélération ou un déplacement du capteur 319 dans une direction parallèle au plan de la membrane 321 engendre un couple de basculement de la masse 325 ou 326 susceptible de déformer la membrane de manière détectable. Les pattes 327 et 328 ne sont pas indispensables pour cela, mais elles renforcent la fixation des masses 325 et 326 et permettent de créer un bras de levier important.

Ainsi, le capteur 319 permet de mesurer à la fois une accélération et des variations de pression notamment dans un domaine de fréquence infrasonore. La membrane 321 peut être dimensionnée pour se déformer en réponse à des ondes de pression dans d'autres domaines de fréquence.

Les systèmes de commande qui ont été décrits comprennent un dispositif d'identification. Ils pourraient également en comporter plusieurs, chacun étant porté par un utilisateur autorisé différent.

Les systèmes de commande qui ont été décrits comprennent une liaison radio montante, c'est-à-dire de l'unité centrale vers le dispositif d'identification. On peut se passer de cette liaison. Dans ce cas, pour authentifier le dispositif d'identification, celui-ci contient une clé privée secrète connue également de l'unité centrale. Cette clé secrète est également utilisée par le codeur 131 ou 231 et le décodeur 126 ou le circuit 242.

## Revendications

1. Système de commande dit mains libres pour véhicule (1, 101, 201), comprenant une unité centrale de commande (5, 105, 205) embarquée sur ledit véhicule et un dispositif d'identification (6, 106, 206) destiné à être porté par un utilisateur, ledit dispositif d'identification incluant un émetteur (132, 232) pour transmettre des signaux à distance et sans fil à ladite unité centrale de commande, ladite unité centrale comprenant un récepteur (125, 225) pour recevoir lesdits signaux, ladite unité centrale comportant des moyens d'authentification pour authentifier ledit dispositif d'identification et des moyens de localisation pour déterminer si ledit dispositif d'identification est localisé à l'intérieur ou à l'extérieur d'un espace intérieur (3, 103, 203) dudit véhicule à partir desdits signaux, ladite unité centrale comprenant des moyens de commande pour autoriser ou empêcher le démarrage dudit véhicule et/ou commander des moyens de condamnation/décondamnation des serrures des ouvrants dudit véhicule en fonction de la localisation dudit dispositif d'identification à l'intérieur ou à l'extérieur dudit espace intérieur, ledit dispositif d'identification comprenant un capteur (11, 111, 211) apte à mesurer des variations de pression dans l'environnement dudit dispositif d'identification , ledit émetteur du dispositif d'identification étant apte à transmettre un signal de réponse dépendant desdites variations de pression mesurées par ledit capteur à ladite unité centrale, lesdits moyens de localisation de ladite unité centrale comprenant un comparateur (127, 241) apte à comparer ledit signal de réponse avec un signal de référence, **caractérisé en ce que** ledit capteur est apte à mesurer des variations de pression dans un domaine de fréquences infrasonore, ledit comparateur étant apte à comparer ledit signal de réponse avec un signal de référence auquel sont corrélées des variations de pression dans ledit espace intérieur dans un domaine de fréquences infrasonore afin de déterminer la localisation dudit dispositif d'identification à l'intérieur ou à l'extérieur dudit espace intérieur.

2. Système de commande selon la revendication 1, **caractérisé par le fait qu**'il comporte au moins un haut-parleur (120, 220) apte à générer des variations de pression dans un domaine de fréquences infrasonore dans ledit espace intérieur (103, 203), ladite unité centrale comprenant un générateur de signal (121, 221) pour engendrer ledit signal de référence de manière contrôlée et un circuit de sortie (123, 124, 223, 224) apte à commander ledit haut-parleur en fonction dudit signal de référence pour produire lesdites variations de pression dans ledit espace intérieur.

3. Système de commande selon la revendication 2, **caractérisé par le fait que** lesdites variations de pression présentes dans ledit espace intérieur portent une information numérique de référence (Sbₜ).

4. Système de commande selon la revendication 3, **caractérisé par le fait que** ledit dispositif d'identification inclut un détecteur de bit (131) relié audit capteur (111) pour décoder ladite information numérique de référence incluse dans lesdites variations de pression présente dans l'espace intérieur et un générateur de réponse pour encoder une information numérique de réponse (M) en fonction de ladite information numérique de référence, ledit signal de réponse incluant ladite information numérique de réponse.

5. Système de commande selon l'une des revendications 2 à 4, **caractérisé par le fait que** ledit au moins un haut-parleur est agencé sur une surface de séparation qui sépare ledit espace intérieur (203) en deux volumes intérieurs (203a, 203b), lesdits moyens de localisation étant aptes à déterminer si ledit dispositif d'identification est localisé dans l'un ou l'autre desdits deux volumes en fonction d'une relation de corrélation entre le signal de réponse et le signal de référence commandant ledit haut-parleur.

6. Système de commande selon la revendication 5, **caractérisé par le fait que** lesdits moyens de localisation sont aptes à déterminer ladite relation de corrélation entre ladite information numérique de réponse (M) et ladite information numérique de référence (Sbₜ).

7. Système de commande selon l'une des revendications 1 à 6, **caractérisé par le fait que** l'émetteur dudit dispositif d'identification est apte à transmettre un signal de réponse incluant un signal de mesure (D) qui représente une amplitude desdites variations de pression mesurées.

8. Système de commande selon les revendications 5 et 7 prises en combinaison, **caractérisé par le fait que** lesdits moyens de localisation sont aptes à mesurer ladite relation de corrélation entre les variations de pression représentées par ledit signal de mesure (D) et ledit signal de référence (Pᵢ, Pₑ).

9. Système de commande selon la revendication 7 ou la revendication 8, **caractérisé par le fait que** ladite unité centrale (5, 205) est reliée à un capteur intérieur (12, 212) agencé de manière à mesurer des variations de pression dans ledit espace intérieur dans un domaine de fréquences infrasonore, ledit signal de référence comprenant un signal de référence intérieur (Pᵢ) représentatif des variations de pression mesurées par ledit capteur intérieur, ledit comparateur étant apte à comparer ledit signal de référence interne avec ledit signal de mesure.

10. Système de commande selon l'une des revendications 7 à 9, **caractérisé par le fait que** ladite unité centrale (5, 205) est reliée à un capteur extérieur (13, 213) agencé de manière à mesurer des variations de pression à l'extérieur dudit véhicule dans un domaine de fréquences infrasonore, ledit signal de référence comprenant un signal le référence extérieur (Pₑ) représentatif des variations de pression mesurées par ledit capteur extérieur, ledit comparateur étant apte à comparer ledit signal de référence extérieur avec ledit signal de mesure.

11. Système de commande selon l'une des revendications 7 à 10, **caractérisé par le fait que** lesdits moyens de localisation comprennent un détecteur de bit apte (242) à détecter une information numérique (M) incluse dans ledit signal de mesure (D).

12. Système de commande selon l'une des revendications 1 à 11, **caractérisé par le fait que** ledit émetteur du dispositif d'identification est apte à transmettre ledit signal réponse de manière numérique et cryptée, ladite unité centrale comprenant un décodeur (126, 242) pour décrypter ledit signal de réponse.

13. Système de commande selon l'une des revendications 1 à 12, **caractérisé par le fait que** ledit dispositif d'identification comprend un premier capteur apte à mesurer une accélération dudit dispositif d'identification, ledit émetteur du dispositif d'identification étant apte à transmettre un signal de mesure dépendant de ladite accélération mesurée par ledit premier capteur à ladite unité centrale, et **par le fait que** ledit système de commande comprend un deuxième capteur agencé dans ledit véhicule de manière à mesurer une accélération dudit véhicule, ledit deuxième capteur étant connecté à ladite unité centrale, lesdits moyens de localisation de ladite unité centrale comprenant un comparateur apte à comparer ledit signal de réponse avec un signal de référence dépendant de ladite accélération mesurée par ledit deuxième capteur afin de déterminer la localisation dudit dispositif d'identification à l'intérieur ou à l'extérieur dudit véhicule.

14. Procédé de commande d'un système de commande dit mains libres pour véhicule, ledit système comprenant une unité centrale de commande (5, 105, 205) embarquée sur ledit véhicule et un dispositif d'identification (6, 106, 206) destiné à être porté par un utilisateur, ledit procédé comportant les étapes consistant à :
- mesurer des variations de pression dans l'environnement dudit dispositif d'identification dans un domaine de fréquences infrasonore,
- transmettre des signaux à distance et sans fil depuis ledit dispositif d'identification à ladite unité centrale de commande, lesdits signaux incluant un signal de réponse dépendant desdites variations de pression dans l'environnement dudit dispositif d'identification,
- mettre à disposition de ladite unité centrale un signal de référence auquel sont corrélées des variations de pression dans ledit espace intérieur dans un domaine de fréquences infrasonore,
- déterminer la localisation dudit dispositif d'identification à l'intérieur ou à l'extérieur dudit espace intérieur en fonction dudit signal de réponse et dudit signal de référence,
- autoriser ou empêcher le démarrage dudit véhicule et/ou commander des moyens de condamnation/décondamnation des serrures des ouvrants dudit véhicule en fonction de la localisation dudit dispositif d'identification à l'intérieur ou à l'extérieur dudit espace intérieur.

15. Procédé selon la revendication 14, **caractérisé par le fait qu**'il comprend l'étape consistant à authentifier ledit dispositif d'identification à l'aide desdits signaux.

16. Procédé selon la revendication 14 ou la revendication 15, **caractérisé par le fait que** ledit signal de référence est mis à disposition de l'unité centrale par un capteur de pression (12, 13, 212, 213).

17. Procédé selon l'une des revendications 14 à 16, **caractérisé par le fait que** ledit signal de référence est mis à disposition de l'unité centrale à partir d'une mémoire dans laquelle le signal de référence (Sbₜ) est stocké sous une forme prédéterminée.

## Claims

1. Control system termed hands-free for vehicle (1, 101, 201), comprising a central control unit (5, 105, 205) onboard the said vehicle and an identification device (6, 106, 206) intended to be carried by a user, the said identification device including a transmitter (132, 232) for sending remote and wireless signals to the said central control unit, the said central unit comprising a receiver (125, 225) for receiving the said signals, the said central unit comprising authentication means for authenticating the said identification device and location means for determining whether the said identification device is located inside or outside an interior space (3, 103, 203) of the said vehicle on the basis of the said signals, the said central unit comprising control means for authorizing or preventing the starting of the said vehicle and/or for controlling means for locking/unlocking the locks of the openable panels of the said vehicle depending on the location of the said identification device inside or outside the said interior space, the said identification device comprising a sensor (11, 111, 211) able to measure pressure variations in the environment of the said identification device, the said transmitter of the identification device being able to send a response signal dependent on the said pressure variations measured by the said sensor to the said central unit, the said location means of the said central unit comprising a comparator (127, 241) able to compare the said response signal with a reference signal, **characterized in that** the said sensor is able to measure pressure variations in an infrasound frequency domain, the said comparator being able to compare the said response signal with a reference signal with which are correlated pressure variations in the said interior determine the location of the said identification device inside or outside the said interior space.

2. Control system according to Claim 1, **characterized in that** it comprises at least one loudspeaker (120, 220) able to generate pressure variations in an infrasound frequency domain in the said interior space (103, 203), the said central unit comprising a signal generator (121, 221) for producing the said reference signal in a monitored manner and an output circuit (123, 124, 223, 224) able to control the said loudspeaker as a function of the said reference signal to produce the said pressure variations in the said interior space.

3. Control system according to Claim 2, **characterized in that** the said pressure variations present in the said interior space carry a digital reference cue (Sbₜ).

4. Control system according to Claim 3, **characterized in that** the said identification device includes a bit detector (131) linked to the said sensor (111) for decoding the said digital reference cue included in the said variations in pressure present in the interior space and a response generator for encoding a digital response cue (M) as a function of the said digital reference cue, the said response signal including the said digital response cue.

5. Control system according to one of Claims 2 to 4, **characterized in that** the said at least one loudspeaker is arranged on a separation surface which separates the said interior space (203) into two interior volumes (203a, 203b), the said location means being able to determine whether the said identification device is located in one or the other of the said two volumes as a function of a correlation relation between the response signal and the reference signal controlling the said loudspeaker.

6. Control system according to Claim 5, **characterized in that** the said location means are able to determine the said correlation relation between the said digital response cue (M) and the said digital reference cue (Sbₜ).

7. Control system according to one of Claims 1 to 6, **characterized in that** the transmitter of the said identification device is able to send a response signal including a measurement signal (D) which represents an amplitude of the said measured pressure variations.

8. Control system according to Claims 5 and 7 taken in combination, **characterized in that** the said location means are able to measure the said correlation relation between the pressure variations represented by the said measurement signal (D) and the said reference signal (Pᵢ, Pₑ).

9. Control system according to Claim 7 or Claim 8, **characterized in that** the said central unit (5, 205) is linked to an interior sensor (12, 212) arranged so as to measure pressure variations in the said interior space in an infrasound frequency domain, the said reference signal comprising an interior reference signal (Pᵢ) representative of the pressure variations measured by the said interior sensor, the said comparator being able to compare the said internal reference signal with the said measurement signal.

10. Control system according to one of Claims 7 to 9, **characterized in that** the said central unit (5, 205) is linked to an exterior sensor (13, 213) arranged so as to measure pressure variations outside the said vehicle in an infrasound frequency domain, the said reference signal comprising an exterior reference signal (Pₑ) representative of the pressure variations measured by the said exterior sensor, the said comparator being able to compare the said exterior reference signal with the said measurement signal.

11. Control system according to one of Claims 7 to 10, **characterized in that** the said location means comprise a bit detector (242) able to detect a digital cue (M) included in the said measurement signal (D).

12. Control system according to one of Claims 1 to 11, **characterized in that** the said transmitter of the identification device is able to send the said response signal in a digital and encrypted manner, the said central unit comprising a decoder (126, 242) for decrypting the said response signal.

13. Control system according to one of Claims 1 to 12, **characterized in that** the said identification device comprises a first sensor able to measure an acceleration of the said identification device, the said transmitter of the identification device being able to send a measurement signal dependent on the said acceleration measured by the said first sensor to the said central unit, and **in that** the said control system comprises a second sensor arranged in the said vehicle so as to measure an acceleration of the said vehicle, the said second sensor being connected to the said central unit, the said location means of the said central unit comprising a comparator able to compare the said response signal with a reference signal dependent on the said acceleration measured by the said second sensor so as to determine the location of the said identification device inside or outside the said vehicle.

14. Control method for a control system termed hands-free for vehicle, the said system comprising a central control unit (5, 105, 205) onboard the said vehicle and an identification device (6, 106, 206) intended to be carried by a user, the said method comprising the steps consisting in:
- measuring pressure variations in the environment of the said identification device in an infrasound frequency domain,
- sending remote and wireless signals from the said identification device to the said central control unit, the said signals including a response signal dependent on the said pressure variations in the environment of the said identification device,
- providing the said central unit with a reference signal with which are correlated pressure variations in the said interior space in an infrasound frequency domain,
- determining the location of the said identification device inside or outside the said interior space as a function of the said response signal and of the said reference signal,
- authorizing or preventing the starting of the said vehicle and/or controlling means for locking/unlocking the locks of the openable panels of the said vehicle depending on the location of the said identification device inside or outside the said interior space.

15. Method according to Claim 14, **characterized in that** it comprises the step consisting in authenticating the said identification device with the aid of the said signals.

16. Method according to Claim 14 or Claim 15, **characterized in that** the central unit is provided with the said reference signal by a pressure sensor (12, 13, 212, 213).

17. Method according to one of Claims 14 to 16, **characterized in that** the central unit is provided with the said reference signal from a memory in which the reference signal (Sbₜ) is stored in a predetermined form.

## Patentansprüche

1. Freihändiges Kontrollsystem für Fahrzeuge (1, 101, 201) mit einer zentralen Kontrolleinheit (5, 105, 205) an Bord des Fahrzeugs und einer ldentifikationsvorrichtung (6, 106, 206), die von einem Benutzer getragen werden kann, wobei die Identifikationsvorrichtung einen Sender (132, 232) zur drahtlosen Fernübertragung von Signalen zu der zentralen Kontrolleinheit umfasst, wobei die zentrale Kontrolleinheit einen Empfänger (125, 225) zum Empfang dieser Signale umfasst, wobei die zentrale Kontrolleinheit Authentifizierungsmittel zum Authentifizieren der Identifikationsvorrichtung und Lokalisierungsmittel aufweist, um anhand der Signale zu bestimmen, ob sich die Identifizierungsvorrichtung innerhalb oder außerhalb eines Innenraums (3, 103, 203) des Fahrzeugs befindet, wobei die zentrale Kontrolleinheit Steuerungsmittel, um das Anlassen des Fahrzeugs zu autorisieren oder zu verhindern, und/oder Steuerungsmittel zur Verriegelung/Entriegelung der Schlösser der Türen des Fahrzeugs in Abhängigkeit von der Lokalisierung der Identifikationseinrichtung innerhalb oder außerhalb des Innenraums umfasst, wobei die Identifikationseinrichtung einen Sensor (11, 111, 211) umfasst, welcher Druckänderungen in der Umgebung der Identifikationsvorrichtung messen kann, wobei der Sender der Identifikationsvorrichtung ein von den vom Sensor gemessenen Druckunterschieden abhängiges Antwortsignal zu der Zentraleinheit übertragen kann, wobei die Lokalisierungsmittel der Zentraleinheit einen Komparator (127, 241) umfassen, welcher das Antwortsignal mit einem Referenzsignal vergleichen kann, **dadurch gekennzeichnet, dass** der Sensor Druckunterschiede in einem Infraschallbereich messen kann, wobei der Komparator das Antwortsignal mit einem Referenzsignal vergleichen kann, mit welchem Druckunterschiede in den Innenraum in einem Infraschallfrequenzbereich korreliert sind, um die Lokalisierung der Identifikationsvorrichtung innerhalb oder außerhalb des Innenraums durchzuführen.

2. Kontrollsystem gemäß Anspruch 1, **dadurch gekennzeichnet, dass** es wenigstens einen Lautsprecher (120, 220) aufweist, welcher in dem Innenraum (102, 203) Druckunterschiede in einem Infraschallfrequenzbereich erzeugen kann, wobei die Zentraleinheit einen Signalgenerator (121, 221) zur Erzeugung des Referenzsignals in kontrollierter Weise und eine Ausgangsschaltung (123, 124, 223, 224), welche den Lautsprecher zur Erzeugung der Druckunterschiede im Innenraum in Abhängigkeit von dem Referenzsignal steuern kann, umfasst.

3. Kontrollsystem gemäß Anspruch 2, **dadurch gekennzeichnet, dass** die in dem Innenraum vorhandenen Druckunterschiede eine digitalisierte Referenzinformation (Sbₜ) übertragen.

4. Kontrollsystem gemäß Anspruch 3, **dadurch gekennzeichnet, dass** die Identifikationsvorrichtung einen mit dem Sensor (111) verbundenen Bitdetektor (131) zur Dekodierung der digitalisierte Referenzinformation, die in den in dem Innenraum vorhandenen Druckänderungen enthalten ist, und einen Antwortgenerator zur Kodierung einer digitalisierten Antwortinformation (M) in Abhängigkeit von der digitalisierten Referenzinformation aufweist, wobei das Antwortsignal die digitalisierte Antwortinformation enthält.

5. Kontrollsystem gemäß einem der Ansprüche 2 bis 4, **dadurch gekennzeichnet, dass** der wenigstens eine Lautsprecher auf einer Trennfläche angeordnet ist, welche den Innenraum (203) in zwei Innenvolumina (203a, 203b) unterteilt, wobei die Lokalisierungsmittel in der Lage sind, mittels einer Korrelationsrelation zwischen dem Antwortsignal und dem den Lautsprecher steuernden Referenzsignal festzustellen, ob sich die Identifikationsvorrichtung in dem einen oder dem anderen der beiden Volumina befindet.

6. Kontrollsystem gemäß Anspruch 5, **dadurch gekennzeichnet, dass** die Lokalisierungsmittel die Korrelationsrelation zwischen der digitalisierten Antwortinformation (M) und der digitalisierten Referenzinformation (SBₜ) bestimmen können.

7. Kontrollsystem gemäß einem der Ansprüche 1 bis 6, **dadurch gekennzeichnet, dass** der Sender der Identifikationsvorrichtung ein Antwortsignal übertragen kann, das ein Messsignal (D) umfasst, welches eine Amplitude der gemessenen Druckänderungen repräsentiert.

8. Kontrollsystem gemäß den kombinierten Ansprüchen 5 und 7, **dadurch gekennzeichnet, dass** die Lokalisierungsmittel die Korrelationsrelation zwischen den durch das Messsignal (D) repräsentierten Druckänderungen und dem Referenzsignal (Pᵢ, Pₑ) messen können.

9. Kontrollsystem gemäß Anspruch 7 oder Anspruch 8, **dadurch gekennzeichnet, dass** die Zentraleinheit (5, 205) mit einem Innensensor (12, 212) verbunden ist, der so angeordnet ist, dass Druckänderungen in dem Innenraum in einem Infraschallfrequenzbereich gemessen werden können, wobei das Referenzsignal ein inneres Referenzsignal (Pᵢ) umfasst, welches Druckunterschiede repräsentiert, die von dem Innensensor gemessen werden, wobei der Komparator das innere Referenzsignal mit dem Messsignal vergleichen kann.

10. Kontrollsystem gemäß einem der Ansprüche 7 bis 9, **dadurch gekennzeichnet, dass** die Zentraleinheit (5, 205) mit einem Außensensor (13, 213) verbunden ist, der so angeordnet ist, dass Druckänderungen außerhalb des Fahrzeugs in einem Infraschallfrequenzbereich gemessen werden, wobei das Referenzsignal ein äußeres Referenzsignal (Pₑ) umfasst, welches von dem Außensensor gemessene Druckänderungen repräsentiert, wobei der Komparator das äußere Referenzsignal mit dem Messsignal vergleichen kann.

11. Kontrollsystem gemäß einem der Ansprüche 7 bis 10, **dadurch gekennzeichnet, dass** die Lokalisierungsmittel einen Bitdetektor (242) umfassen, welcher eine in dem Messsignal (D) enthaltene digitalisierte Information (M) detektieren kann.

12. Kontrollsystem gemäß einem der Ansprüche 1 bis 11, **dadurch gekennzeichnet, dass** der Sender der Identifikationsvorrichtung das Antwortsignal digital und verschlüsselt übertragen kann, wobei die Zentraleinheit einen Decoder (126, 142) zur Entschlüsselung des Antwortsignals umfasst.

13. Kontrollsystem gemäß einem der Ansprüche 1 bis 12, **dadurch gekennzeichnet, dass** die Identifikationsvorrichtung einen ersten Sensor zur Messung einer Beschleunigung der Identifikationsvorrichtung umfasst, wobei der Sender der Identifikationsvorrichtung ein von der von dem ersten Sensor der Zentraleinheit gemessenen Beschleunigung abhängiges Messsignal an die Zentraleinheit übertragen kann, und **dadurch**, dass das Kontrollsystem einen zweiten Sensor umfasst, der so in dem Fahrzeug angeordnet ist, dass eine Beschleunigung des Fahrzeugs gemessen werden kann, wobei der zweite Sensor mit der Zentraleinheit verbunden ist, wobei die Lokalisierungsmittel der Zentraleinheit einen Komparator umfassen, der das Antwortsignal mit einem Referenzsignal vergleichen kann, welches von der durch den zweiten Sensor gemessenen Beschleunigung abhängt, um die Lokalisierung der Identifikationsvorrichtung innerhalb oder außerhalb des Fahrzeugs durchzuführen.

14. Verfahren zur Steuerung eines freihändigen Kontrollsystems für Fahrzeuge, wobei das System eine zentrale Kontrolleinheit (5, 105, 205) an Bord des Fahrzeugs und eine Identifikationsvorrichtung (6, 106, 206), die von einem Benutzer getragen werden kann, umfasst, wobei das Verfahren die Schritte umfasst, bestehend aus:
- Messen von Druckänderungen in einem Infraschallfrequenzbereich in der Umgebung der Identifikationsvorrichtung,
- drahtloses Fernübertragen von Signalen von der Identifikationsvorrichtung zu der zentralen Kontrolleinheit, wobei die Signale eine von den Druckänderungen in der Umgebung der Identifikationsvorrichtung abhängiges Antwortsignal umfassen,
- Bereitstellen eines Referenzsignals für die Zentraleinheit, mit welchem Druckänderungen in einem Infraschallfrequenzbereich in dem Innenraum korreliert sind,
- Lokalisieren der Identifikationsvorrichtung innerhalb oder außerhalb des Innenraums in Abhängigkeit von dem Antwortsignal und dem Referenzsignal,
- Autorisieren oder Verhindern des Anlassens des Fahrzeugs und/oder Steuern von Verriegelungs-/Entriegelungsmitteln der Schlösser der Türen des Fahrzeugs in Abhängigkeit von der Lokalisierung der Identifikationsvorrichtung innerhalb oder außerhalb des Innenraums.

15. Verfahren gemäß Anspruch 14, **dadurch gekennzeichnet, dass** es den Schritt umfasst, gemäß welchem die Identifikationsvorrichtung mittels der Signale authentifiziert wird.

16. Verfahren gemäß Anspruch 14 oder Anspruch 15, **dadurch gekennzeichnet, dass** das Referenzsignal der Zentraleinheit mittels eines Drucksensors (12, 13, 212, 213) bereitgestellt wird.

17. Verfahren gemäß einem der Ansprüche 14 bis 16, **dadurch gekennzeichnet, dass** das Bezugssignal der Zentraleinheit aus einem Speicher bereitgestellt wird, in welchem das Referenzsignal (Sbₜ) in einer vorgegebenen Form gespeichert ist.
